# EUROPEAN PATENT APPLICATION

(11) **EP 4 696 729 A1**
(43) Date of publication of application: **18.02.2026**
(21) Application number: 24194810.8
(22) Date of filing: 15.08.2024
(51) Int. Cl.: C08G 18/24, C08G 18/48, C08G 18/69, C08G 18/72, C08G 18/75, C08G 18/79, C08G 18/80, C08L 63/00, C09J 163/00

(54) **POLYURETHANE TOUGHENER SUITABLE FOR EPOXY COMPOSITION**

(71) Applicant: Henkel AG & Co. KGaA, 40589 Düsseldorf (DE)
(72) Inventor: Shyshov, Oleksandr, 40589 Düsseldorf (DE); Benomar, Mustapha, 47137 Duisburg (DE); Klotz, Michael, 40597 Düsseldorf (DE)

(57) **Abstract**

The present invention relates to a polyurethane toughener suitable for epoxy composition, in particular a polyurethane toughener providing for epoxy composition with excellent mechanical strength as well as corrosion resistance while possessing low viscosity, to the method of producing the polyurethane toughener, to a curable epoxy composition comprising the polyurethane toughener, and a method of bonding substrates by using the curable epoxy composition.

## Description

### Technical fields

The present invention relates to a polyurethane toughener suitable for epoxy composition, in particular a polyurethane toughener providing for epoxy composition with excellent mechanical strength as well as corrosion resistance while possessing low viscosity, to the method of producing the polyurethane toughener, to a curable epoxy composition comprising the polyurethane toughener, and a method of bonding substrates by using the curable epoxy composition.

### Background

Adhesives based on epoxy resins are known for good adhesion to various substrates, good resistance to oil and moisture, excellent tensile strength etc. However, "pure" epoxy adhesives are too brittle for high-performance structural applications such as vehicle body assembly. To improve toughness and/or impact resistance, a specific type of additives, so called tougheners or impact modifiers, have been commonly used in epoxy-based adhesives. Polyurethane based thermoplastic polymers (TPU) are among the most widely used as tougheners/impact modifiers. Mechanism of polyurethane toughening is based on a reaction-induced phase separation during epoxide curing which creates elastomeric polyurethane domains inside the brittle epoxy matrix that stop crack propagation.

State of the art approaches towards TPU tougheners are based on sequential reaction of a polyol or polyamine with excess of diisocyanate, leading to polyurethane prepolymers with terminal NCO-groups, and a subsequent end-capping reaction of the polyurethane prepolymers with different blocking groups such as phenols and ketoximes. One drawback of this approach is that blocking group is typically used in excess, in order to fully block NCO-groups, and residual blocking agent can act as a chain stopper in epoxy adhesive, negatively affecting thermal and mechanical properties as well as storage stability of an adhesive.

For example, EP 2843022 A1 discloses a composition comprising one or more epoxy resins; one or more rubber modified epoxy resins; one or more toughening compositions comprising the reaction product of one or more isocyanate terminated prepolymers and one or more capping compounds having one or more bisphenolic, phenolic, benzyl alcohol, aminophenyl or, benzylamino moieties wherein the reaction product is terminated with the capping compound; one or more curing agents and one or more catalysts for epoxy resins which initiates cure at a temperature of about 100°C or greater.

WO 2004/055092 A discloses epoxy resin compositions with improved impact resistance, which comprise a reaction product of a polyurethane prepolymer terminated by isocyanate groups with a monohydroxyepoxide.

US 2018/0022859 A1 discloses a toughener which is an isocyanate-terminated polymer, the isocyanate groups of which have been fully or partly blocked by reaction with a blocking agent. The isocyanate-terminated polymer is produced by first reacting one or more polyols comprising polytetramethylene ether glycol and two or more polyisocyanates to form an isocyanate-terminated polymer, and subsequently reacting the isocyanate-terminated polymer with a blocking agent in order to partly or fully block the isocyanate groups of the isocyanate-terminated polymer. The molar ratio of isocyanate groups in the diisocyanate to isocyanate groups in the polyisocyanate having a mean isocyanate functionality of 2.5 or more is limited to the range from 2:1 to 20:1.

There is a strong need to develop polyurethane tougheners with improved phase separation and imparting superior toughening performance in the wide range of curing temperatures.

### Summary of the invention

These objects are achieved by the invention. One subject matter of the invention relates to a polyurethane toughener suitable for epoxy composition, being a reaction product of a reactant mixture A comprising:
a polymeric polyol, and
a partially blocked polyisocyanate being a reaction product of a reactant mixture B comprising:
   a polyisocyanate, and
   a blocking agent.

Another subject matter relates to a curable epoxy resin composition comprising: an epoxy resin having an average of more than one epoxide group per molecule, a polyurethane toughener according to the present invention, and a curing agent.

Yet another subject matter relates to a process for producing a polyurethane toughener comprising the steps of:
providing a reactant mixture B comprising a polyisocyanate and a blocking agent,
reacting the reactant mixture B to obtain a partially blocked polyisocyanate,
reacting a reactant mixture A comprising the obtained partially blocked polyisocyanate and a polymeric polyol to obtain a polyurethane toughener.

Yet another subject matter relates to a curable epoxy resin composition comprising:
an epoxy resin having an average of more than one epoxide group per molecule,
a polyurethane toughener according to the present invention, and
a curing agent.

Yet another subject matter relates to method of bonding two substrates together, comprising:
providing a curable epoxy resin composition according to the present invention,
applying the composition to one or more surfaces of at least a first substrate,
placing at least one surface of a second substrate in contact with the curable epoxy resin composition, and
allowing the curable epoxy resin composition to cure.

Yet another subject matter relates to the use of the curable epoxy resin composition according to the present invention in bonding articles having substrates made of materials selected from unsaturated polyester resin materials, vinyl ester resin materials, epoxy resin materials, metals, plastic materials, and combination thereof.

Yet another subject matter relates to a bonded article comprising the cured product of the curable epoxy resin composition according to the present invention.

### Brief description of the drawings

Figure 1 shows the ATR-IR spectrum of the HDI trimer in Example PT-1.
Figure 2 shows the ATR-IR spectrum of the partially blocked polyisocyanate in Example PT-1.
Figure 3 shows the ATR-IR spectrum of the polyurethane toughener in Example PT-1.

### Detailed description of the invention

Unless specified otherwise, as used herein, the terms "a", "an" and "the" include both singular and plural referents.

The terms "comprising" and "comprises" as used herein are synonymous with "including", "includes" or "containing", "contains", and are inclusive or open-ended and do not exclude additional, non-recited members, elements or process steps.

The term "at least one" or "one or more" used herein to define a component refers to the type of the component, and not to the absolute number of molecules.

### The reactant mixture B for producing the partially blocked polyisocyanate

The partially blocked polyisocyanate is a reaction product of a reactant mixture B comprising a polyisocyanate and a blocking agent. Preferably, the polyisocyanate has in average at least 2.0, more preferably at least 2.5, preferably 2.5 to 5, and more preferably 3 to 4 isocyanate groups per molecule.

The isocyanate functionality, i.e. isocyanate groups per molecule in average can be determined, for example, by a titrimetric isocyanate determination according to EN ISO 11909 or a molar mass determination by means of high-resolution mass spectroscopy.

In one embodiment, the reactant mixture B comprises a polyisocyanate having in average at least 2.5 isocyanate groups per molecule as the only isocyanate component.

In another embodiment, the reactant mixture B comprises a polyisocyanate having in average less than 2.5 isocyanate groups per molecule as the only isocyanate component.

In yet another embodiment, the reactant mixture B comprises a polyisocyanate having in average at least 2.5 isocyanate groups per molecule, such as a trimer of diisocyanate, and a polyisocyanate having in average less than 2.5 isocyanate groups per molecule, such as a diisocyanate, as the isocyanate component.

For the diisocyanates, preference is given to monomeric diisocyanates or dimers thereof. Suitable diisocyanates are, for example, aliphatic, cycloaliphatic, aromatic or araliphatic diisocyanates. These are commercial products. Examples of suitable diisocyanates are methylene diphenyl diisocyanate (MDI), hexamethylene diisocyanate (HDI), toluene diisocyanate (TDI), toluidine diisocyanate (TODI), isophorone diisocyanate (IPDI), trimethylhexamethylene diisocyanate (TMDI), 2,5- or 2,6-bis(isocyanatomethyl)bicyclo[2.2.1]heptane, naphthalene 1,5-diisocyanate (NDI), dicyclohexylmethyl diisocyanate (H12MDI), p-phenylene diisocyanate (PPDI), xylylene diisocyanate (XDI), m-tetramethylxylylene diisocyanate (TMXDI) etc., and dimers thereof.

Preferred diisocyanates are aliphatic or cycloaliphatic diisocyanates, preferably monomeric diisocyanates or dimers thereof. Examples are tetramethylene 1,4-diisocyanate, 2-methylpentamethylene 1,5-diisocyanate, hexamethylene 1,6-diisocyanate (HDI), 2,2,4- and 2,4,4-trimethylhexamethylene 1,6-diisocyanate (TMDI), decamethylene 1,10-diisocyanate, dodecamethylene 1,12-diisocyanate, lysine diisocyanate and lysine ester diisocyanate, cyclohexane 1,3- and 1,4-diisocyanate, 1-methyl-2,4- and -2,6-diisocyanatocyclohexane and any desired mixtures of these isomers (HTDI or H6TDI), 1-isocyanato-3,3,5-trimethyl-5-isocyanatomethylcyclohexane (=isophorone diisocyanate or IPDI), perhydro-2,4'- and -4,4'-diphenylmethane diisocyanate (HMDI or H12MDI), 1,4-diisocyanato-2,2,6-trimethylcyclohexane (TMCDI), 1,3- and 1,4-bis(isocyanatomethyl)cyclohexane, m- and p-xylylene diisocyanate (m- and p-XDI), m- and p-tetramethyl-1 ,3- and -1,4-xylylene diisocyanate (m- and p-TMXDI), bis(1-isocyanato-1-methylethyl)-naphthalene, dimer and trimer fatty acid isocyanates such as 3,6-bis(9-isocyanato-nonyl)-4,5-di(1-heptenyl)cyclohexene (dimeryl diisocyanate) or dimers thereof, and any desired mixtures of the aforementioned isocyanates.

Preferred examples of polyisocyanates having in average at least 2.5 isocyanate groups per molecule are oligomers, for example trimers or higher oligomers, of diisocyanates. Preference is given to isocyanurates, biurets, iminooxadiazines and allophanates of diisocyanates, especially aliphatic, cycloaliphatic, aromatic or araliphatic diisocyanates, particular preference being given to isocyanurates and biurets.

For the polyisocyanate having in average at least 2.5 isocyanate groups per molecule, particular preference is given to biurets of HDI or IPDI, isocyanurates of HDI or IPDI, allophanates of HDI or IPDI, TDI oligomers and mixed isocyanurates of TDI and HDI. Particular preference is given to isocyanurates of HDI or IPDI. In the case of IPDI isocyanurate, multiple isomers are possible, which may be in the form of a mixture. Preference is further given to the aforementioned oligomers which may be modified further, for example with one or more polyether urethane or polyether allophanate groups.

Such polyisocyanates having in average at least 2.5 isocyanate groups per molecule are commercially available. Examples of commercially available types are HDI biurets, for example Desmodur N 100 and Desmodur N 3200 (from Covestro), Tolonate HDB and Tolonate HDB-LV (from Rhodia) and Duranate 24A-100 (from Asahi Kasei); HDI isocyanurates, for example Desmodur N 3300, Desmodur N 3600 and Desmodur N 3790 BA (from Covestro), Wannate HT-100 and Wannate HT-600 (from Wanhua), Tolonate HDT, Tolonate HDT-LV and Tolonate HDT-LV2 (from Rhodia), Duranate TPA-100 and Duranate THA-100 (from Asahi Kasei) and Coronate HX (from Nippon Polyurethane); HDI allophanates, for example Desmodur VP LS 2102 (from Covestro); IPDI isocyanurates, for example Desmodur Z 4470 (from Covestro) and Vestanat T1890/100 (from Evonik); TDI oligomers, for example Desmodur IL (from Covestro); mixed isocyanurates based on TDI/HDI, for example Desmodur HL (from Covestro); and modified polymers such as Bayhydur 3100 (from Covestro), an HDI isocyanurate modified with a polyether via a urethane linkage, Bayhydur 304 (from Covestro), an HDI isocyanurate modified with a polyether via an allophanate linkage.

Person skilled in the art recognize that isocyanurate trimers generally include lower levels of oligomers (pentamers, heptamers, etc.) that impart higher order isocyanate functionality to the compound. Accordingly, the term "isocyanate trimer" may include the trimer by itself or as a mixture of trimer and other oligomers. For example, the commercially available HDI trimer Desmodur N3600 polyisocyanate trimer has a stated equivalent weight of 183 g/mol, which is higherthan the equivalent weight of pure trimer, 164 g/mol, due to the presence of small amounts of higher order oligomers.

In the partially blocked polyisocyanate, the isocyanate groups terminated in the polyisocyanate have been partly blocked by reaction with a blocking agent, wherein preferably at least 40%, or at least 45%, more preferably at least 50%, and in particular 50% to 80%, e.g. 50% to 60% of the isocyanate groups terminated in the polyisocyanate have been blocked.

The blocking agent is especially a proton-active compound, which is also referred to as an H-acidic compound. The hydrogen in the blocking agent that can react with an isocyanate group (acidic hydrogen) is typically bonded to an oxygen atom, a nitrogen atom, usually of a secondary amine, or a carbon atom of a CH-acidic compound. The blocking agent is therefore preferably an alcohol, a compound having at least one aromatic hydroxyl group, such as phenols and bisphenols, a secondary amine, an oxime or a CH-acidic compound. Acidic hydrogen is also referred to as active hydrogen.

The blocking agent is preferably selected from a compound having at least one aliphatic or aromatic hydroxyl group, a compound having at least one amino group, a compound having at least one oxime group, a compound having at least one CH-acidic group and a compound having at least one thiol group, preference being given to a compound having at least one aliphatic or aromatic hydroxyl group. The blocking agent may have one or more, preferably one or two, of the groups mentioned. An aliphatic hydroxyl group is bonded to an aliphatic carbon atom. An aromatic hydroxyl group is bonded to an aromatic carbon atom, preference being given to a phenolic hydroxyl group.

The blocking agent is preferably an alcohol, especially an aralkyl alcohol, for example benzyl alcohol, and especially a phenol or a bisphenol. The phenols and bisphenols may have one or more substituents. Suitable substituents are, for example, alkyl, e.g. C₁₋₂₀-alkyl, alkenyl, e.g. C₂₋₂₀-alkenyl, alkoxy, e.g. C₁₋₂₀-alkoxy, preferably C₁₋₄-alkoxy, or aryl, e.g. phenyl.

Examples of phenols and bisphenols suitable as blocking agents are especially phenol, cardanol (3-pentadecenylphenol (from cashewnut shell oil)), nonylphenol, m/p-methoxyphenols, phenols that have been reacted with styrene or dicyclopentadiene, bisphenol A and bisphenol F.

The reactant mixture B for preparing the partially blocked polyisocyanate may comprise a catalyst. Preferably, the catalyst is one or more organometallic acidic catalysts. Examples of the organometallic catalyst include tin (II) compounds, tin (IV) compounds, lead (II) compounds, bismuth (III) compounds, nickel compounds, cobalt compounds, chromium compounds, manganese compounds, antimony compounds, zinc compounds, iron compounds, copper compounds, lithium compounds, and the like. One type of these may be used alone, or two or more types of these may be used in combination. Among these, from the viewpoint of foaming ability, tin (II) compounds are preferable, and dicarboxylic acid salts of aliphatic carboxylic acids having 6 to 20 carbon atoms and tin (II) are particularly preferable. Examples of the aliphatic carboxylic acid include octanoic acid, 2-ethylhexanoic acid, neodecanoic acid, lauric acid, stearic acid, oleic acid, linoleic acid, linolenic acid, and the like. Specific examples of the tin(II) compound include tin (II) bis(2-ethylhexanoate), tin(II) bis(neodecanoate), tin(II) bis(laurate) (such as dibutyltin dilaurate and dioctyltin dilaurate) and the like. In one preferred embodiment, the acidic catalyst is dioctyltin dilaurate.

The reaction of the reactant mixture A is appropriately conducted at elevated temperature, for example at a temperature of at least 60°C, preferably at least 70°C, especially at a temperature in the range from 70°C to 100°C, preferably around 80°C. The duration naturally depends greatly on the reaction conditions chosen and may, for example, be in the range from 15 min to 6 h, e.g. 1.5 hours. The progress or ending of the reaction can be monitored directly with reference to the analysis of isocyanate content in the reaction mixture.

### The reactant mixture A for producing the polyurethane toughener

According to the present invention, the polyurethane toughener is a reaction product of a reactant mixture A comprising a polymeric polyol and the partially blocked polyisocyanate according to the present invention. The reactant mixture A of the polyurethane toughener comprises at least one polymeric polyol preferably having an average hydroxyl functionality from at least 1.8, preferably from 1.8 to 6.0, more preferably from 1.8 to 4.0.

As used in this specification, the terms "polymer" and "polymeric" means prepolymers, oligomers, and both homopolymers and copolymers. As used in this specification, "prepolymer" means a polymer precursor capable of further reactions or polymerization by one or more reactive groups to form a higher molecular mass or cross-linked state. As used in this specification, the prefix "poly" refers to two or more. A polyol is understood to be a compound containing more than one hydroxyl (-OH) group in the molecule. A polyol can further have other functionalities on the molecule. The term "polyol" encompasses a single polyol or a mixture of two or more polyols. The average hydroxyl (-OH) functionality refers to the average number of reactive hydroxyl groups contained in one molecule of polyol. The term "average hydroxyl functionality" means the actual (nominal) functionality of the hydroxy group of the polyol. Thus, it is to be understood that, while triol has theoretical functionality of 3 and diol has theoretical functionality of 2, commercially available triols and diols are not usually expected to exhibit nominal functionalities as high as their theoretical functionalities.

In one embodiment, the polymeric polyol is selected from polymeric diol, polymeric triol, polymeric tetraol and combination thereof. In one preferred embodiment, the polymeric polyol is at least one polymeric diol.

The polymeric polyol may have a weight average molecular weight of from 400 to 10000 g/mol, preferably from 400 to 8000 g/mol, more preferably from 400 to 7000 g/mol and in particular from 1000 to 6000. "Molecular weight" herein refers to weight average molecular weight unless otherwise specified. The weight average molecular weight Mw, is determined according to the present invention by gel permeation chromatography (GPC, also known as SEC) at 23°C using a styrene standard according to DIN EN ISO 16014-5:2012-10.

The polymeric polyol may also have a hydroxyl value from 10 to 500 mg KOH/g, preferably from 20 to 400 mg KOH/g, and more preferably from 50 to 350 mg KOH/g, measured according to DIN EN ISO 4629.

Some suitable polymeric polyols include the reaction products of low molecular weight polyhydric alcohols with alkylene oxides, so-called polyether polyols. The alkylene oxides preferably contain 2 to 4 carbon atoms. Some reaction products of this type include, for example, the reaction products of ethylene glycol, propylene glycol, the isomeric butane diols, hexane diols or 4,4'-dihydroxydiphenyl propane with ethylene oxide, propylene oxide or butylene oxide or mixtures of two or more thereof. The reaction products of polyhydric alcohols, such as glycerol, trimethylol ethane or trimethylol propane, pentaerythritol or sugar alcohols or mixtures of two or more thereof, with the alkylene oxides mentioned to form polyether polyols are also suitable. Thus, depending on the desired molecular weight, products of the addition of only a few mol ethylene oxide and/or propylene oxide per mol or of more than one hundred mol ethylene oxide and/or propylene oxide onto low molecular weight polyhydric alcohols may be used. Other polyether polyols are obtainable by condensation of, for example, glycerol or pentaerythritol with elimination of water. Some suitable polyols include those polyols obtainable by polymerization of tetrahydrofuran.

The polyether polyols are reacted in known manner by reacting the starting compound containing a reactive hydrogen atom with alkylene oxides, for example ethylene oxide, propylene oxide, butylene oxide, styrene oxide, tetrahydrofuran or epichlorohydrin or mixtures of two or more thereof.

Suitable starting compounds are, for example, water, ethylene glycol, 1,2- or 1,3-propylene glycol, 1,4- or 1,3-butylene glycol, hexane-1,6-diol, octane-1,8-diol, neopentyl glycol, 1,4-hydroxymethyl cyclohexane, 2-methyl propane-1,3-diol, glycerol, trimethylol propane, hexane-1,2,6-triol, butane-1,2,4-triol, trimethylol ethane, pentaerythritol, mannitol, sorbitol, methyl glycosides, sugars, phenol, isononylphenol, resorcinol, hydroquinone, 1,2,2- or 1,1,2-tris-(hydroxyphenyl)-ethane, ammonia, methyl amine, ethylenediamine, tetra- or hexamethylenediamine, triethanolamine, aniline, phenylenediamine, 2,4- and 2,6-diaminotoluene and polyphenylpolymethylene polyamines, which may be obtained by aniline/formaldehyde condensation, or mixtures of two or more thereof.

Some suitable polymeric polyols include diol EO/PO (ethylene oxide/propylene oxide) block copolymers, EO-tipped polypropylene glycols, or alkoxylated bisphenol A.

Some suitable polymeric polyols include polyether polyols modified by vinyl polymers. These polyols can be obtained, for example, by polymerizing styrene or acrylonitrile or mixtures thereof in the presence of polyether polyol.

Commercial examples of polyether polyol include Arcol series polyols such as Arcol PPG 425, Arcol PPG 2025 from Coverstro, Dianol series polyols such as Dianol 330 from Arkema, Voranol CP series polyols such as Voranol CP 450 and Voranol CP 4755, Caradol series polyols such as ED56-200 and Lupranol series polyols such as Lupranol 2090 from BASF.

Some suitable polymeric polyols include polyester polyols. For example, it is possible to use polyester polyols obtained by reacting low molecular weight alcohols, more particularly ethylene glycol, diethylene glycol, neopentyl glycol, hexanediol, butanediol, propylene glycol, glycerol or trimethylol propane, with caprolactone. Other suitable polyhydric alcohols for the production of polyester polyols are 1,4-hydroxymethylcyclohexane, 2-methylpropane-1,3-diol, butane-1,2,4-triol, triethylene glycol, tetraethylene glycol, polyethylene glycol, dipropylene glycol, polypropylene glycol, dibutylene glycol and polybutylene glycol.

Some suitable polymeric polyols include polyester polyols obtained by polycondensation. Thus, dihydric and/or trihydric alcohols may be condensed with less than the equivalent quantity of dicarboxylic acids and/or tricarboxylic acids or reactive derivatives thereof to form polyester polyols. Suitable dicarboxylic acids are, for example, adipic acid or succinic acid and higher homologs thereof containing up to 16 carbon atoms, unsaturated dicarboxylic acids, such as maleic acid or fumaric acid, cyclohexane dicarboxylic acid (CHDA), and aromatic dicarboxylic acids, more particularly the isomeric phthalic acids, such as phthalic acid, isophthalic acid or terephthalic acid. Citric acid and trimellitic acid, for example, are also suitable tricarboxylic acids. The acids mentioned may be used individually or as mixtures of two or more thereof. Polyester polyols of at least one of the dicarboxylic acids mentioned and glycerol which have a residual content of OH groups are suitable. Suitable alcohols include but are not limited to propylene glycol, butane diol, pentane diol, hexanediol, ethylene glycol, diethylene glycol, triethylene glycol, dipropylene glycol, tripropylene glycol, cyclohexanedimethanol (CHDM), 2-methyl-1,3-propanediol (MPDiol), or neopentyl glycol or isomers or derivatives or mixtures of two or more thereof. High molecular weight polyester polyols may be used in the second synthesis stage and include, for example, the reaction products of polyhydric, preferably dihydric, alcohols (optionally together with small quantities of trihydric alcohols) and polybasic, preferably dibasic, carboxylic acids. Instead of free polycarboxylic acids, the corresponding polycarboxylic anhydrides or corresponding polycarboxylic acid esters with alcohols preferably containing 1 to 3 carbon atoms may also be used (where possible). The polycarboxylic acids may be aliphatic, cycloaliphatic, aromatic or heterocyclic or both. They may optionally be substituted, for example by alkyl groups, alkenyl groups, ether groups or halogens. Suitable polycarboxylic acids are, for example, succinic acid, adipic acid, suberic acid, azelaic acid, sebacic acid, phthalic acid, isophthalic acid, terephthalic acid, trimellitic acid, phthalic anhydride, tetrahydrophthalic anhydride, hexahydrophthalic anhydride, tetrachlorophthalic anhydride, endomethylene tetrahydrophthalic anhydride, glutaric anhydride, maleic acid, maleic anhydride, fumaric acid, dimer fatty acid or trimer fatty acid or mixtures of two or more thereof.

The polyester polyol may optionally contain a small number of terminal carboxyl groups. Polyesters obtainable from lactones, for example based on ε-caprolactone (also known as "polycaprolactones"), or hydroxycarboxylic acids, for example ω-hydroxycaproic acid, may also be used.

Polyester polyols of oleochemical origin may also be used. Oleochemical polyester polyols may be obtained, for example, by complete ring opening of epoxidized triglycerides of a fatty mixture containing at least partly olefinically unsaturated fatty acids with one or more alcohols containing 1 to 12 carbon atoms and subsequent partial transesterification of the triglyceride derivatives to form alkyl ester polyols with 1 to 12 carbon atoms in the alkyl group.

Some suitable polymeric polyols include C36 dimer diols and derivatives thereof. Some suitable polymeric polyols include castor oil and derivatives thereof. Some suitable polymeric polyols include fatty polyols, for example the products of hydroxylation of unsaturated or polyunsaturated natural oils, the products of hydrogenations of unsaturated and polyunsaturated polyhydroxy natural oils, polyhydroxyl esters of alkyl hydroxyl fatty acids, polymerized natural oils, soybean polyols, and alkylhydroxylated amides of fatty acids. Some suitable polyols include the hydroxy functional polybutadienes (polybutadiene polyol, such as Krasol LBH 2000 from Cray Valley and Poly bd from Resin Solutions). Some suitable polymeric polyols include polyisobutylene polyols. Some suitable polymeric polyols include polyacetal polyols. Polyacetal polyols are understood to be compounds obtainable by reacting glycols, for example diethylene glycol or hexanediol or mixtures thereof, with formaldehyde. Polyacetal polyols may also be obtained by polymerizing cyclic acetals. Some suitable polymeric polyols include polycarbonate polyols. Polycarbonate polyols may be obtained, for example, by reacting diols, such as propylene glycol, butane-1 ,4-diol or hexane-1 ,6-diol, diethylene glycol, triethylene glycol or tetraethylene glycol or mixtures of two or more thereof, with diaryl carbonates, for example diphenyl carbonate, or phosgene. Some suitable polymeric polyols include polyamide polyols.

Some suitable polymeric polyols include polyacrylates containing OH groups. These polyacrylates may be obtained, for example, by polymerizing ethylenically unsaturated monomers bearing an OH group. Such monomers are obtainable, for example, by esterification of ethylenically unsaturated carboxylic acids and dihydric alcohols, the alcohol generally being present in a slight excess. Ethylenically unsaturated carboxylic acids suitable for this purpose are, for example, acrylic acid, methacrylic acid, crotonic acid or maleic acid. Corresponding OH-functional esters are, for example, 2-hydroxyethyl acrylate, 2-hydroxyethyl methacrylate, 2-hydroxypropyl acrylate, 2-hydroxypropyl methacrylate, 3-hydroxypropyl acrylate or 3-hydroxypropyl methacrylate or mixtures of two or more thereof.

In one preferred embodiment, the polymeric polyol is one or more polymeric diols. In one particularly preferred embodiment, the polymeric polyol is at least one polytetramethylene ether glycol (PTMEG). PTMEG can be prepared, for example, by polymerization of tetrahydrofuran, for example via acidic catalysis.

Polytetramethylene ether glycols are commercially available, for example the PolyTHF products from BASF such as PolyTHF2000, PolyTHF2500 CO or PolyTHF3000 CO, or the Terathane products from Invista B.V.

In one preferred embodiment, the polymeric polyol is selected from polyether polyol, polyester polyol, polybutadiene polyol, polycarbonate polyol and combination thereof, and preferably is selected from polyether polyol, polybutadiene polyol and combination thereof.

In one embodiment, the polymeric polyol is present in an amount of 30% to 80% by weight, preferably 35% to 70% by weight, and more preferably 40% to 65% by weight of the total weight of reactant mixture A.

The reactant mixture A for producing the polyurethane toughener may comprise a catalyst. Examples of suitable catalysts are, for example, organic tin compounds such as dibutyltin dilaurate (DBTL), or else organic bismuth compounds such as Bi(lll) neodecanoate. The reactant mixture A is optionally also possible to add stabilizers, e.g. butylhydroxytoluene (BHT).

The reactant mixture A for producing the polyurethane toughener according to the present invention may comprise a chain extender. Usually, chain extenders are low molecular weight molecules used to modify the backbone of a given polymer. The chain extender has a molecular weight Mₙ of 60 to 600 g/mol, and more preferably from 60 to 500 g/mol. In a preferred embodiment, the chain extender is a short chain diol, in particular a linear or branched, alkyl or cycloalkyl diol with 9 or less carbon atoms. In an especially preferred embodiment, the chain extender is selected from the group consisting of 1,2-propanediol, 1,3-propanediol, 2-methyl-1,3-propanediol, 1,2-butanediol, 1,3-butanediol, 1,4-butanediol, 1,5-pentanediol, 3-methyl-1,5-prentanediol, 1,6-hexanediol, 1,9-nonanediol, 1,12-dodecandiol, ethylene glycol, propylene glycol, neopentyl glycol, butylene glycol, cyclohexane-1,2-diol, cyclohexane-1,4-diol, 1,4-bis(hydroxymethyl)cyclohexane and mixtures thereof.

The chain extender may be present in the reactant mixture A in an amount less than 1 wt% based on the total weight of the reactant mixture A. In one embodiment, the reactant mixture A essentially contains no chain extender, e.g. contains no more than 0.5 wt%, preferably no more than 0.1 wt%, more preferably no more than 0.05 wt%, and in particular contains no chain extender.

The polyurethane toughener being the reaction product of the reactant mixture A possesses a low viscosity. In one embodiment, the polyurethane toughener has a viscosity of no more than 1000 Pa.s, preferably no more than 400 Pa.s, and more preferably no more than 200 Pa.s, measured by Brookfield viscometer with Spindle No. 25 at 70°C, 0.5 mm gap width and 10 s⁻¹ shear rate.

The polyurethane toughener may be terminated with blocked isocyanate groups or hydroxyl groups, and preferably is terminated with hydroxyl groups. The polyurethane toughener may have a hydroxyl value from 0 to 50 mg KOH/g, preferably from 0 to 20 mg KOH/g, and more preferably from 5 to 15 mg KOH/g, measured according to DIN EN ISO 4629. The molar ratio of excess hydroxyl groups in the polyurethane toughener to the polyisocyanate ranges from 0 to 0.8, preferably from 0 to 0.6, more preferably from 0.05 to 0.6, in particular from 0.1 to 0.6.

The present invention also relates to process for producing a polyurethane toughener, comprising the steps of:
providing a reactant mixture B comprising a polyisocyanate a blocking agent, optionally a catalyst,
reacting the reactant mixture B to obtain a partially blocked polyisocyanate, and
reacting the reactant mixture A comprising the obtained partially blocked polyisocyanate, a polymeric polyol, and optionally a catalyst to obtain a polyurethane toughener.

The reaction of the reactant mixture B is appropriately conducted at elevated temperature, for example at a temperature of at least 60°C, preferably at least 70°C, especially at a temperature in the range from 70°C to 100°C, preferably around 80°C. The duration naturally depends greatly on the reaction conditions chosen and may, for example, be in the range from 15 min to 6 h. The progress or ending of the reaction can be monitored directly with reference to the analysis of isocyanate content in the reaction mixture.

The reaction of the reactant mixture A is also appropriately conducted at elevated temperature, for example at a temperature of at least 60°C, preferably at least 70°C, especially at a temperature in the range from 70°C to 100°C, preferably around 80°C. The duration naturally depends greatly on the reaction conditions chosen and may, for example, be in the range from 15 min to 6 h. The progress or ending of the reaction can be monitored directly with reference to the analysis of isocyanate content in the reaction mixture.

The products obtained in two reactions can be used or used further as they are, meaning that workup is generally not required. The blocking of the partially blocked polyisocyanate and the formation of the polyurethane toughener can, for example, advantageously be conducted as a one-pot reaction.

The polyurethane toughener according to the present invention is especially suitable for use in a one-component or two-component epoxy resin composition, preferably one-component epoxy resin composition, for increasing the impact resistance of the cured epoxy resin matrix. The one-component or two-component epoxy resin composition may be in the form of a liquid and/or cure at low or high temperature.

The one-component or two-component epoxy resin composition of the invention comprises at least one epoxy resin, at least one curing agent for epoxy resins, and the polyurethane toughener according to the invention. The polyurethane toughener according to the present invention may be present in the epoxy resin composition within a range from 1% to 60% by weight, preferably from 5% to 25% by weight, based on the total weight of the epoxy resin composition.

The epoxy resin present in the epoxy resin composition may be any epoxy resin commonly used in this field. Epoxy resins are obtained, for example, from the reaction of an epoxy compound, for example epichlorohydrin, with a polyfunctional aliphatic or aromatic alcohol, i.e. a diol, triol or polyol. It is possible to use one or more epoxy resins. The epoxy resin is preferably a liquid epoxy resin and/or a paste or a solid epoxy resin.

Liquid epoxy resins or solid epoxy resins are preferably diglycidyl ethers. Examples of diglycidyl ethers are especially diglycidyl ethers of difunctional saturated or unsaturated, branched or unbranched, cyclic or open-chain C2-C30 alcohols, for example ethylene glycol glycidyl ether, butanediol glycidyl ether, hexanediol diglycidyl ether, octanediol glycidyl ether, cyclohexanedimethanol diglycidyl ether, neopentyl glycol diglycidyl ether; diglycidyl ethers of difunctional low to high molecular weight polyether polyols, for example polyethylene glycol diglycidyl ether, polypropylene glycol diglycidyl ether; diglycidyl ethers of difunctional diphenols and optionally triphenols, which is understood to mean not just pure phenols but optionally also substituted phenols.

The manner of substitution may be very varied. More particularly, this is understood to mean substitution directly on the aromatic ring to which the phenolic OH group is bonded. Phenols are also understood to mean not just monocyclic aromatics but also polycyclic or fused aromatics and heteroaromatics having the phenolic OH group directly on the aromatic or heteroaromatic system. Examples of suitable bisphenols and optionally triphenols include 1,4-dihydroxybenzene, 1,3-dihydroxybenzene, 1,2-dihydroxybenzene, 1,3-dihydroxytoluene, 3,5-dihydroxybenzoate, 2,2-bis(4-hydroxy-phenyl)propane (bisphenol A), bis(4-hydroxyphenyl)methane (bisphenol F), bis(4-hydroxyphenyl) sulfone (bisphenol S), naphthoresorcinol, dihydroxynaphthalene, dihydroxyanthraquinone, dihydroxybiphenyl, 3,3-bis(p-hydroxyphenyl)phthalide, 5,5-bis(4-hydroxyphenyl)hexahydro-4,7-methanoindane, phenolphthalein, fluorescein, 4,4'-[bis(hydroxyphenyl)-1,3-phenylenebis-(1-methylethylidene)] (bisphenol M), 4,4'-[bis(hydroxyphenyl)-1,4-phenylenebis-(1-methylethylidene)] (bisphenol P), 2,2'-diallyl bisphenol A, diphenols and dicresols prepared by reaction of phenols or cresols with diisopropylidenebenzene, phloroglucinol, gallic esters, phenol or cresol novolaks with hydroxy functionality of 2.0 to 3.5, and all isomers of the aforementioned compounds.

Solid epoxy resins of this kind are commercially available, for example, from Dow or Huntsman or Hexion. Commercially available liquid epoxy resins are obtainable, for example, as Araldite GY 250, Araldite PY 304, Araldite GY 282 (Huntsman, or Hexion) or D.E.R. 331 or D.E.R. 330 (Dow) or D.E.R. 332 (Dow) or Epikote 828 (Hexion).

Preferably, the diglycidyl ether is a diglycidyl ether of bisphenol A (BADGE), of bisphenol F and bisphenol A/F.

The epoxy resin composition further comprises a curing agent for the epoxy resin. In one embodiment, especially for the one-component epoxy resin composition, the curing agent for epoxy resins is one which is activated by elevated temperature. In this embodiment, the composition is a heat-curing epoxy resin composition. "Elevated temperature" is generally understood here to mean, for example, a temperature exceeding 100°C, generally exceeding 110°C or more preferably exceeding 120°C, especially between 110°C and 200°C or 120°C to 200°C Such a curing agent for epoxy resins is preferably a curing agent selected from the group consisting of dicyandiamide, guanamines, guanidines, hydrazides, aminoguanidines and derivatives thereof. Also possible are accelerating curing agents, such as substituted ureas, for example 3-chloro-4-methylphenylurea (chlortoluron), or phenyldimethylureas, especially p-chlorophenyl-N,N-dimethylurea (monuron), 3-phenyl-1,1-dimethylurea (fenuron) or 3,4-dichlorophenyl-N, N-dimethylurea (diuron), but also aliphatically substituted ureas. In addition, it is also possible to use compounds from the class of the imidazoles, such as 2-isopropylimidazole or 2-hydroxy-N-(2-(2-(2-hydroxyphenyl)-4,5-dihydroimidazol-1-yl)ethyl)benzamide and amine complexes.

Preferably, the heat-activatable curing agent is a curing agent selected from the group consisting of dicyandiamide, guanamines, guanidines, am inoguanidines and derivatives thereof; substituted ureas, especially 3-chloro-4-methylphenylurea (chlortoluron), or phenyldimethylureas, especially p-chlorophenyl-N,N-dimethylurea (monuron), 3-phenyl-1,1-dimethylurea (fenuron), 3,4-dichlorophenyl-N, N-dimethylurea (diuron) or else aliphatically substituted ureas, and also imidazoles and amine complexes. A particularly preferred curing agent is dicyandiamide.

Advantageously, the total proportion of the curing agent for epoxy resins which is activated by elevated temperature is 0.5% to 10% by weight, preferably 1% to 8% by weight, based on the weight of the overall composition.

The curing agent used for epoxy resin compositions may, in an alternative embodiment, especially comprise, for example, polyamines, polymercaptans, polyamidoamines, amino-functional polyamine/polyepoxide adducts, as are particularly well-known to the person skilled in the art as curing agents. These curing agents are especially suitable for a two-component epoxy resin composition consisting of two components, i.e. a first component and a second component. The first component comprises, for example, at least the toughener according to the invention and at least one epoxy resin, especially a liquid epoxy resin and/or solid epoxy resin. The second component comprises at least one curing agent for epoxy resins. The first component and the second component are each stored in an individual container. Only at the time of use are the two components mixed with one another and the reactive constituents react with one another and hence lead to crosslinking of the composition. Two-component epoxy resin compositions of this kind are already curable at low temperatures, typically between 0°C and 100°C, especially at room temperature. In this embodiment, curing is effected by an addition reaction between the curing agent and the compounds having epoxy groups that are present in the composition. It is thus particularly advantageous in this embodiment when the amount of the curing agent in the overall composition is such that the epoxy-reactive groups are in a stoichiometric ratio relative to the epoxy groups.

The epoxy resin composition may optionally also comprise at least one additional optional toughener different than the polyurethane toughener of the invention. The additional tougheners may be solid or liquid.

In one embodiment, this additional toughener is a liquid rubber which is a carboxyl- or epoxy-terminated acrylonitrile/butadiene copolymer or a derivative thereof. Liquid rubbers of this kind are commercially available, for example, under Hypro (formerly Hycar) CTBN and CTBNX and ETBN name from Emerald Performance Materials LLC. In a further embodiment, the toughener is a liquid polyacrylate rubber which is fully miscible with liquid epoxy resins and only separates on curing of the epoxy resin matrix to give microdroplets. Liquid polyacrylate rubbers of this kind are available, for example, under the 20208-XPA name from Rohm and Haas.

It will be clear to the person skilled in the art that it is of course also possible to use mixtures of liquid rubbers, especially mixtures of carboxyl- or epoxy-terminated acrylonitrile/butadiene copolymers or derivatives thereof with epoxy-terminated polyurethane prepolymers.

In a further embodiment, the additional toughener is a solid toughener which is a block copolymer. The block copolymer is obtained from an anionic or controlled free-radical polymerization of methacrylic ester with at least one further monomer having an olefinic double bond. Preferred monomers having an olefinic double bond are especially those in which the double bond is directly conjugated to a heteroatom or to at least one further double bond. Especially suitable are monomers selected from the group comprising styrene, butadiene, acrylonitrile and vinyl acetate. Preference is given to acrylate-styrene-acrylic acid (ASA) copolymers obtainable, for example, under the GELOY 1020 name from GE Plastics. Particularly preferred block copolymers are block copolymers formed from methyl methacrylate, styrene and butadiene. Block copolymers of this kind are obtainable, for example, as triblock copolymers under the SBM group name from Arkema.

In a further embodiment, the additional toughener is a core-shell polymer. Core-shell polymers consist of an elastic core polymer and a rigid shell polymer. Especially suitable core-shell polymers consist of a core composed of elastic acrylate or butadiene polymer, encased by a rigid shell of a rigid thermoplastic polymer. This core-shell structure forms either spontaneously through separation of a block copolymer or is defined by the conduct of the polymerization as a latex or suspension polymerization with subsequent grafting. Preferred core-shell polymers are what are called MBS polymers, which are commercially available under the Clearstrength trade name from Arkema, Paraloid from Dow (formerly Rohm and Haas) or F351 from Zeon.

Particular preference is given to core-shell polymer particles that are already in the form of a dried polymer latex. Examples of these are GENIOPERL M23A from Wacker with a polysiloxane core and acrylate shell, radiation-crosslinked rubber particles from the NEP series, manufactured by Eliokem, or Nanoprene from Lanxess or Paraloid EXL from Dow. Further comparable examples of core-shell polymers are supplied under the Albidur name by Evonik Hanse GmbH, Germany. Likewise suitable are nanoscale silicates in epoxide matrix, as supplied under the Nanopox trade name by Evonik Hanse GmbH, Germany.

In a further embodiment, the additional toughener is a reaction product of a carboxylated solid nitrile rubber with excess epoxy resin.

The proportion of the above-described additional tougheners is, for example, 0% to 45% by weight, preferably 1% to 45% by weight, especially 3% to 35% by weight, based on the weight of the overall composition.

The epoxy resin composition may of course comprise other constituents. More particularly, these are fillers, reactive diluents, such as reactive diluents bearing epoxy groups, catalysts, stabilizers, especially heat and/or light stabilizers, thixotropic agents, plasticizers, solvents, mineral or organic fillers, blowing agents, dyes and pigments, corrosion stabilizers, surfactants, defoamers and adhesion promoters. In respect of these additives, it is possible to use all those known in the art in the customary amounts.

The fillers are preferably, for example, mica, talc, kaolin, wollastonite, feldspar, syenite, chlorite, bentonite, montmorillonite, calcium carbonate (precipitated or ground), dolomite, quartz, silicas (fumed or precipitated), cristobalite, calcium oxide, aluminum hydroxide, magnesium oxide, hollow ceramic beads, hollow glass beads, hollow organic beads, glass beads, color pigments. Fillers mean both the organically coated forms and the uncoated commercially available forms that are known to the person skilled in the art.

Advantageously, the total content of the overall filler is 3% to 50% by weight, preferably 5% to 35% by weight, especially 5% to 25% by weight, based on the weight of the overall composition.

Examples of the reactive diluents are glycidyl ethers of monofunctional saturated or unsaturated, branched or unbranched, cyclic or open-chain C4-C30 alcohols, especially selected from the group consisting of butanol glycidyl ether, hexanol glycidyl ether, 2-ethylhexanol glycidyl ether, allyl glycidyl ether, tetrahydrofurfuryl and furfuryl glycidyl ether, trimethoxysilyl glycidyl ether; glycidyl ethers of difunctional saturated or unsaturated, branched or unbranched, cyclic or open-chain C2-C30 alcohols, especially selected from the group consisting of ethylene glycol glycidyl ether, butanediol glycidyl ether, hexanediol glycidyl ether, octanediol glycidyl ether, cyclohexanedimethanol diglycidyl ether and neopentyl glycol diglycidyl ether; glycidyl ethers of tri- or polyfunctional, saturated or unsaturated, branched or unbranched, cyclic or open-chain alcohols, such as epoxidized castor oil, epoxidized trimethylolpropane, epoxidized pentaerythritol or polyglycidyl ethers of aliphatic polyols such as sorbitol, glycerol or trimethylolpropane; glycidyl ethers of phenol compounds and aniline compounds, especially selected from the group consisting of phenyl glycidyl ether, cresyl glycidyl ether, p-tert-butylphenyl glycidyl ether, nonylphenol glycidyl ether, 3-n-pentadecenyl glycidyl ether (from cashewnut shell oil), N,N-diglycidylaniline and triglycidyl of p-aminophenol; epoxidized amines such as N,N-diglycidylcyclohexylamine; epoxidized mono- or dicarboxylic acids, especially selected from the group consisting of glycidyl neodecanoate, glycidyl methacrylate, glycidyl benzoate, diglycidyl phthalate, tetrahydrophthalate and hexahydrophthalate, and diglycidyl esters of dimeric fatty acids, and also glycidyl terephthalate and trimellitate; epoxidized di- or trifunctional, low to high molecular weight polyether polyols, especially polyethylene glycol diglycidyl ether or polypropylene glycol diglycidyl ether.

Particular preference is given to hexanediol diglycidyl ether, cresyl glycidyl ether, p-tert-butylphenyl glycidyl ether, polypropylene glycol diglycidyl ether and polyethylene glycol diglycidyl ether.

Advantageously, the total proportion of the reactive diluent is 0% to 20% by weight, preferably 1% to 8% by weight, based on the weight of the overall epoxy resin composition.

Suitable plasticizers are, for example, phenol alkylsulfonates or N-butylbenzene-sulfonamide, which are respectively available as Mesamoll and Dellatol BBS from Bayer. Examples of suitable stabilizers include optionally substituted phenols such as butylhydroxytoluene (BHT) or Wingstay T (Elikem), sterically hindered amines or N-oxyl compounds such as TEMPO (Evonik).

The present invention also relates to a curable epoxy resin composition comprising:
an epoxy resin having an average of more than one epoxide group per molecule,
a polyurethane toughener according to the present invention, and
a curing agent.

In one preferred embodiment, the curable epoxy resin composition comprises by weight of the composition:
20% to 60% of an epoxy resin,
1% to 60% of a polyurethane toughener according to the present invention,
1% to 10% of a curing agent,
0% to 40% of an organic or mineral filler,
0% to 15% of a reactive diluent,
0% to 20% of a CTBN derivative, and
0% to 40% of a core-shell toughener.

The one-component epoxy resin composition, especially an adhesive, especially cures at high temperature. The curing is affected by heating the composition to a temperature above the heat activation of the thermally activatable curing agent. This hardening temperature is preferably a temperature in the range from 100 to 220°C, preferably 120 to 200°C. In the case of a two-component epoxy resin composition, the mixing of the first component and the second component is followed by a reaction which leads to curing of the composition.

The epoxy resin composition of the invention is especially suitable for use as an adhesive, especially as a one-component adhesive, and is preferably used for bonding of at least two substrates. The method of bonding two substrates together, comprising providing a curable epoxy resin composition according to the present invention, applying the composition to one or more surfaces of at least a first substrate, placing at least one surface of a second substrate in contact with the curable epoxy resin composition, and allowing the curable epoxy resin composition to cure.

The adhesives are especially suitable for automobiles or installable or incorporatable modules for motor vehicles. In addition, the compositions of the invention are also suitable for other fields of use. Particular mention should be made of related uses in the construction of modes of transport such as ships, trucks, buses or rail vehicles, in the construction of consumer goods, for example washing machines, but also in the construction sector, for example as reinforcing structural adhesives. As well as adhesives, it is also possible to create sealing compounds or coatings with a composition of the invention.

The materials to be bonded are preferably metals and plastics such as ABS, polyamide, polyphenylene ethers, composite materials such as SMC, unsaturated GFR polyester, epoxide or acrylate composite materials. Preference is given to the application in which at least one material is a metal. A particularly preferred use is considered to be the bonding of identical or different metals, especially in bodywork construction in the automobile industry. The preferred metals are in particular steel, especially electrolytically galvanized, hot-dip galvanized, and oiled steel, Bonazinc-coated steel, and subsequently phosphated steel, and also aluminum, especially in the variants that typically occur in automaking.

The use of the polyurethane toughener according to the present invention in 1K or 2K epoxy resin compositions, especially epoxy resin adhesives, as toughener achieves an increase in toughness compared to the same epoxy resin composition except without the polyurethane toughener according to the present invention.

The cured product of the curable epoxy resin compositions according to the present invention exhibited an excellent impact resistance. For example, the cured product exhibits an impact wedge peel strength of 30 N/mm or more, measured according to ISO 11343.

The invention will be illustrated in more detail by way of the following examples which are not to be understood as limiting the concept of the invention.

### Examples

The following materials were used in the examples.

Desmodur Ultra N3600 is a hexamethylene diisocyanate trimer having an NCO content of 23.2%, an average NCO functionality of 3.2, and a viscosity of 1200 mPas (23 °C) commercially available from Covestro.

Desmodur Ultra N3300 is a hexamethylene diisocyanate trimer having an NCO content of 21.7%, an average NCO functionality of 3.5, and a viscosity of 3000 mPas (23 °C) commercially available from Covestro.

IPDI is isophorone diisocyanate commercially available as Vestanat IPDI from Covestro.

CNSL is a cardanol commercially available as Cardolite NX-2026 from Cardolite.

DOTL is dioctyltin dilaurate commercially available as TIB KAT 216 from TIB Chemicals AG.

PTMEG is a polytetramethylene ether glycol having a molecular weight of about 2000, commercially available as PolyTHF2000 from BASF.

Poly bd is a hydroxyl-terminated polybutadiene resin commercially available from Resin Solutions.

DGEBA is bisphenol A diglycidyl ether, commercially available as D.E.R. 331 from Olin.

Core-shell rubber is a solid toughener commercially available as Kane Ace MX-154 from Kaneka.

Dicyandiamide commercially available as Dyhard 100S from AlzChem.

Additive is a mixture of filler, flame retardant, accelerator and pigment, all commercially available.

Reference PU 1 is a polyurethane toughener not according to the present invention commercially available as Struktol XP3817 from Schill & Seilacher.

Reference PU 2 is a linear polyurethane toughener not according to the present invention, commercially available as Polycavit 3530 from Schill & Seilacher.

Reference PU 3 is a linear polyurethane toughener not according to the present invention, commercially available as DY965 from Huntsman.

### Preparation of polyurethane tougheners (PT-1 to PT-10, inventive)

A 500 mL 4-necked round bottom flask equipped with a mechanical overhead stirrer, nitrogen inlet and thermometer was charged with hexamethylene diisocyanate trimer, isophorone diisocyanate (if present) and CNSL. The reactant mixture was heated to 80°C and 0.1 g of DOTL was added. The mixture was stirred for 1.5 h at 80°C to obtain a partially blocked polyisocyanate. After 90 min the stirring was stopped and PTMEG and Poly bd (if present), preheated to 80°C, was added. When all the materials were kept inside the flask, the stirring was continued for 60 min at 80°C, after which a honey-like material was obtained as inventive polyurethane tougheners and transferred into a storage container.

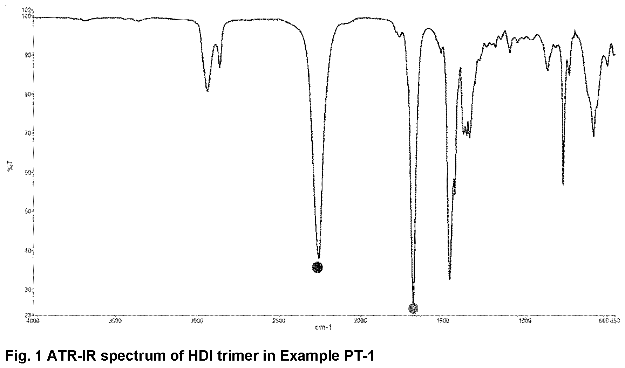

The reactions in preparing the Example PT-1 were monitored using attenuated total reflection in conjunction with infrared spectroscopy (ATR-IR analysis). Hexamethylene diisocyanate trimer, the partially blocked polyisocyanate and the final product of polyurethane toughener were measured and the spectrum are shown in Figures 1 to 3.

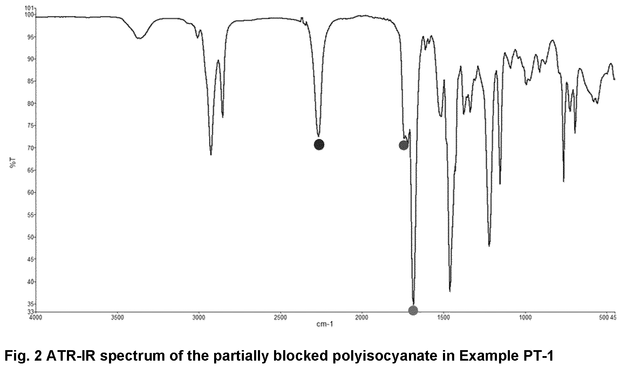

As shown in Figures 1 and 2, after the polyisocyanate reacts with blocking agent, the intensity of isocyanate group band at ca. 2250 cm⁻¹ increases and a new band corresponding to urethane group at 1750-1800 cm⁻¹ appears. The isocyanurate band at ca. 1700 cm⁻¹ remains. This indicates that only part of the NCO groups are blocked, and a partially blocked polyisocyanate was obtained. The amount of free NCO groups has also been quantitatively identified using titrometry.

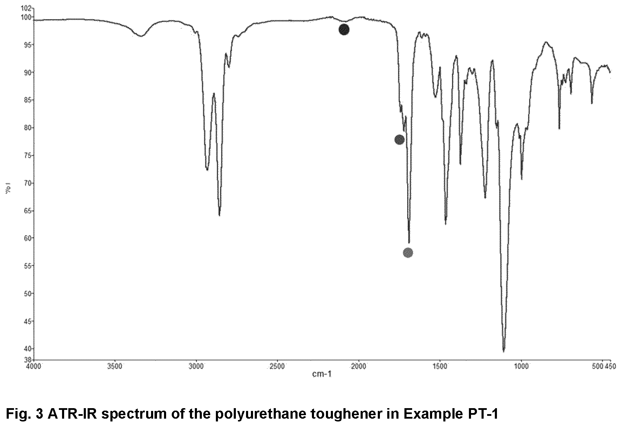

As shown in Figures 2 and 3, after the partially blocked polyisocyanate reacts with polyol, the isocyanate group band at ca. 2250 cm⁻¹ completely disappears and the band corresponding to urethane group at 1750-1800 cm⁻¹ increases compared to the iscyanurate band at ca. 1700 cm⁻¹, indicating that a polyurethane containing no isocyanate groups were obtained. The respective amounts of the reactants of the polyurethane tougheners are shown in Table 1. The viscosity of the polyurethane tougheners was measured by Brookfield viscometer with Spindle No. 25 at 70°C, 0.5 mm gap width and 10 s⁻¹ shear rate, and also shown in Table 1.

**Table 1. Formulations of polyurethane tougheners (in grams) and the viscosity (in Pa·s at 70°C)**

| | PT-1 | PT-2 | PT-3 | PT-4 | PT-5 |
|---|---|---|---|---|---|
| Desmodur N3600 | 19.8 | - | 24.7 | 25.4 | 21.7 |
| Desmodur N3300 | - | 22.4 | - | - | - |
| CNSL | 19.1 | 22.6 | 25.1 | 27.1 | 22 |
| PTMEG | 61.0 | 54.9 | 50.1 | 47.4 | 56.2 |
| DOTL | 0.1 | 0.1 | 0.1 | 0.1 | 0.1 |
| Viscosity | 38.4 | 68.0 | 2050 | 451 | 89.7 |
| | PT-6 | PT-7 | PT-8 | PT-9 | PT-10 |
| Desmodur N3600 | 20.2 | 15.88 | 20.8 | 200 | 19.8 |
| IPDI | - | 4.0 | - | - | - |
| CNSL | 20.5 | 19.1 | 20.1 | 19.3 | 19.1 |
| PTMEG | 59.2 | 50.9 | 52.6 | 48.5 | 36.6 |
| Poly bd | - | - | 6.4 | 12.1 | 24.4 |
| DOTL | 0.1 | 0.1 | 0.1 | 0.1 | 0.1 |
| Viscosity | 17.4 | 137 | 22.3 | 27.9 | 93.3 |

### Preparation of polyurethane toughener (PT-11 , comparative)

A 500 mL 4-necked round bottom flask equipped with a mechanical overhead stirrer, nitrogen inlet and thermometer was charged with PTMEG (100.6 g), trimethylolpropane (0.54 g) and heated to 65°C. IPDI (21.59 g) and DOTL (0.2 g) were added and the reaction mixture was stirred at 75-80°C until constant NCO value. CNSL (29.71 g) was added and the mixture was stirred for additional 1 - 1.5h at 80°C until no free NCO is present. PU toughener was obtained as a colourless slightly brown high viscous liquid.

### Preparation of the epoxy adhesive compositions

Epoxy adhesive compositions EA-1 to EA-11 were prepared by mixing 10 g of respective polyurethane toughener PT-1 to PT-11, 25 g of core-shell rubber as a co-toughener, 41 g of DGEBA, 3.5 g dicyandiamide and 20.5 g of additives in a speedmixer (Hauschild DAC 150.1 FVZ SpeedMixer) to homogenization with vacuum.

### Preparation of test specimens

Hot dip galvanized steel (0.8 mm) and aluminum 6061 (1.25 mm) were used for mechanical tests. corrosion tests were performed on electrical galvanized steel. All metal surfaces were cleaned with ethyl acetate before the tests. Steel substrates after cleaning were oiled with Ferrocote 6130 (3 g/m2). Each epoxy adhesive composition was applied onto the substrate with 0.2 µm glass beads as spacers and held together using metal clamps. The test specimens were cured at 180°C for 27 minutes.

Impact wedge peel strength of the epoxy adhesives was measured using RKP450 pendulum impact tester according to ISO 11343 test method at a 2 m/s rate. Samples pieces measured 20 x 90 mm, with a bond flat of 20 x 30 mm.

Lap shear was carried out according to ISO 4587 test method with a bond flat of 25 x 12.5 mm.

T-peel test was carried out according to ASTM D1876 test method with pulling speed of 50 mm/min.

Corrosion resistance of the epoxy adhesives was tested by curing the LSS samples at 180°C, and placing in a tightly closed container containing 5% aqueous solution of sodium chloride and aging 70°C for 72 hours. After drying the samples, the lap shear strength was measured.

The test results are shown in Tables 2 and 3.

**Table 2. Impact wedge peel (IWP) strength of the epoxy adhesives at 23 °C (in N/mm)**

| | EA-1 | EA-2 | EA-3 | EA-4 | EA-5 | EA-6 | EA -7 | EA-8 | EA-9 | EA-10 | EA-11 |
|---|---|---|---|---|---|---|---|---|---|---|---|
| IWP | 35.3 | 35.1 | 36.0 | 33.6 | 34.6 | 35.4 | 34.6 | 33.6 | 33.7 | 31.7 | 28.8 |

As shown in the test results, the epoxy adhesives according to the inventive examples (EA-1 to EA-10) exhibited improved impact wedge peel (IWP) strength than that according to the comparative example (EA-11).

**Table 3. Other mechanical strength results of the epoxy adhesives**

| | EA-1 | EA-2 | Reference PU 1 |
|---|---|---|---|
| Peel strength on HDG (N/mm) | 12.2 | 11.8 | 7.6 |
| Peel strength on Al (N/mm) | 15.6 | 16.1 | 7 |
| Lap sheer strength on HDG (MPa) | 16.6 | 16.7 | 16.4 |
| Lap sheer strength strength on Al (MPa) | 21.6 | 22.7 | 20 |
| Lap sheer strength on HDG after humidity aging (MPa) | 14.7 | 14.9 | 14.5 |
| Lap sheer strength strength on Al after humidity aging (MPa) | 20.9 | 22 | 18.4 |
| Lap sheer strength on EGS (MPa) | 15.8 | 17.7 | 13.6 |
| Lap sheer strength on EGS (MPa) after aging in 5% NaCl solutions at 70 °C for 72h | 11.1 | 14.8 | 8.7 |
| LSS aged / LSS initial (%) | 70.3 | 83.6 | 64 |

As shown in Table 3, the results of mechanical strength of the cured epoxy adhesive according to the present invention are better than those of a commercial product in the art.

The formulations of epoxy adhesive compositions for low-bake tests and the test results as shown in Table 4.

The epoxy adhesive compositions in the test specimens were cured in an oven with 15 min ramp from 25°C to 140°C and additionally at 140°C for 10 min.

Storage modulus @ 23 °C and Tg of the epoxy resin were measured by dynamic mechanical analysis (DMA) by using the device Q800 (TA Instruments) with single cantilever scanned from -70°C to 250°C at 2K/min. The test results are shown in Table 4.

**Table 4. Formulations of epoxy adhesive compositions for low-bake tests (in weight parts) and the test results.**

| | EA-12 | EA-13 | EA-14 |
|---|---|---|---|
| PT-1 | - | 3.15 | 10.15 |
| Ref. PU-2 | 3.15 | - | - |
| Ref. PU-3 | 11.62 | 11.62 | - |
| BADGE | 2903 | 3303 | 38 |
| MX154 (40% CSR + 60% BADGE) | 14 | - | - |
| MX160 (45% CSR + 55% BADGE) | - | 12.44 | 12.44 |
| CTBN-Toughener | 6.02 | 6.02 | 6.02 |
| Additive | 36.18 | 35.25 | 34. 98 |
| Storage modulus @ 23 °C (MPa) | 2200 | 2158 | 1733 |
| Tg (°C) | 130 | 132 | 134 |
| IWP @23 °C (N/mm) | 4 | 15 | 14 |

As shown in the test results from Table 4, in comparison to the commercial polyurethane tougheners, the inventive polyurethane toughener improved storage modulus, glass transition temperature and impact resistance performance of the epoxy adhesive in low-bake conditions.

## Claims

1. A polyurethane toughener suitable for epoxy composition, being a reaction product of a reactant mixture A comprising:
a polymeric polyol, and
a partially blocked polyisocyanate being a reaction product of a reactant mixture B comprising:
a polyisocyanate, and
a blocking agent.

2. The polyurethane toughener according to claim 1, wherein the polymeric polyol is selected from polyether polyol, polyester polyol, polybutadiene polyol, polycarbonate polyol and combination thereof, and preferably is selected from polyether polyol, polybutadiene polyol and combination thereof.

3. The polyurethane toughener according to claim 1 or 2, wherein the polymeric polyol is polytetramethylene ether glycol, polybutadiene polyol, or combination thereof.

4. The polyurethane toughener according to any of claims 1 to 3, wherein the polyisocyanate is selected from aromatic polyisocyanates, alicyclic polyisocyanates, aliphatic polyisocyanates, araliphatic diisocyanates, and combination thereof, and preferably is one or more aliphatic polyisocyanates.

5. The polyurethane toughener according to any of claims 1 to 4, wherein the blocking agent is a compound having at least one aliphatic or aromatic hydroxyl group, preferably a compound having a phenolic hydroxyl group.

6. The polyurethane toughener according to any of claims 1 to 5, wherein in the partially blocked polyisocyante at least 40%, or at least 45%, more preferably at least 50%, and in particular 50% to 60% of the isocyanate groups in the polyisocyanate are blocked.

7. The polyurethane toughener according to any of claims 1 to 6, wherein the polyurethane toughener has a viscosity of no more than 1000 Pa.s, preferably no more than 400 Pa.s, and more preferably no more than 200 Pa s, measured by Brookfield viscometer with Spindle No. 25 at 70°C, 0.5 mm gap width and 10 s⁻¹ shear rate.

8. A curable epoxy resin composition comprising:
an epoxy resin having an average of more than one epoxide group per molecule,
a polyurethane toughener according to any of claims 1 to 7, and
a curing agent.

9. The curable epoxy resin composition according to claim 7, further comprising one or more additives selected from solid toughener, fillers, liquid rubber, thixotropic agent, reactive diluent, blowing agent, and combination thereof.

10. The curable epoxy resin composition according to claim 7, wherein the epoxy resin is present in the amount of from 10 to 85% by weight, preferably 20 to 60% by weight based on the weight of the composition.

11. The curable epoxy resin composition according to claim 7 or 8, wherein the polyurethane toughener is present in the amount of from 1 to 45% by weight, preferably 10 to 40% by weight based on the weight of the composition.

12. A process for producing a polyurethane toughener according to claim 1, comprising the steps of:
providing a reactant mixture B comprising a polyisocyanate and a blocking agent,
reacting the reactant mixture B to obtain a partially blocked polyisocyanate,
reacting a reactant mixture A comprising the obtained partially blocked polyisocyanate and a polymeric polyol to obtain a polyurethane toughener.

13. A method of bonding two substrates together, comprising:
providing a curable epoxy resin composition according to any one of claims 8 to 11,
applying the composition to one or more surfaces of at least a first substrate,
placing at least one surface of a second substrate in contact with the curable epoxy resin composition, and
allowing the curable epoxy resin composition to cure.

14. The use of the curable epoxy resin composition according to any one of claims 8 to 11 in bonding articles having substrates made of materials selected from unsaturated polyester resin materials, vinyl ester resin materials, epoxy resin materials, metals, plastic materials, and combination thereof.

15. A bonded article comprising the cured product of the curable epoxy resin composition according to any one of claims 8 to 11.
